# EUROPEAN PATENT APPLICATION

(11) **EP 2 456 177 A1**
(43) Date of publication of application: **23.05.2012**
(21) Application number: 11190126.0
(22) Date of filing: 22.11.2011
(51) Int. Cl.: H04M 1/02

(54) **Guide device for sliding unit of sliding-type portable terminal**

(30) Priority: 23.11.2010 KR 20100116630
(71) Applicant: Samsung Electronics Co., Ltd., Suwon-si, Gyeonggi-do 442-742 (KR)
(72) Inventor: Seo, Jeong-Hun, Gyeonggi-do (KR); Lee, Jun-Chul, Gyeonggi-do (KR)
(74) Representative: Hutter, Jacobus Johannes

(57) **Abstract**

Provided is a guide device for a sliding unit used in a sliding-type portable terminal. The guide device includes a slide lower portion, a guide plate, a slide plate integrally engaged with a bottom surface of the slide lower portion, the slide plate sliding while being confined in the guide plate in a way to face the guide plate, and a plurality of lubrication members provided with intervals therebetween in a longitudinal direction of the guide plate to facilitate sliding of the slide plate. The guide device achieves slimness and lightweightness while maintaining mechanical stiffness.

## Description

### BACKGROUND OF THE INVENTION

### 1. Field of the Invention

The present invention relates to a sliding-type portable terminal, and more particularly to, a guide device for a sliding unit of a sliding-type portable terminal.

### 2. Description of the Related Art

Generally, examples of a portable terminal may include a notebook, a Personal Digital Assistant (PDA), a wireless set, an MP3, a Portable Multimedia Player (PMP), a cellular phone, a smart phone, a tablet Personal Computer (PC), and so forth. Among them, a cellular phone or a smart phone has to be lightweight and compact in terms of portability. These devices have evolved to a multimedia application to meet the demand for video calls, games, Video On Demand (VOD), and TV watching as well as voice and short text communication.

The above portable terminal may be classified into a bar type, a folder type, and a sliding type according to their appearance. The sliding-type portable terminal includes a main body, a sliding body which slides on the main body, and a sliding unit which couples the main body with the sliding body. The sliding-type portable terminal may be configured according to a sliding direction, such that the sliding body including a display unit may slide in a longitudinal direction of the main body or the sliding body including the display unit may slide in perpendicular to the longitudinal direction of the main body.

Hereinafter, a structure of a guide device for a conventional sliding unit used in a sliding-type portable terminal will be described.

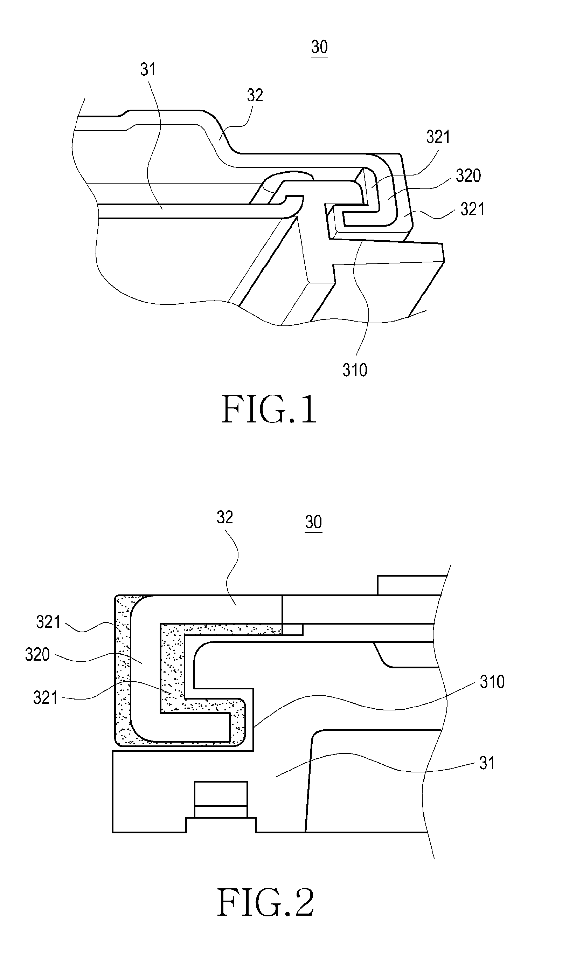

As shown in FIGs. 1 and 2, the conventional sliding unit used in a sliding-type portable terminal is provided with a guide device 30 for allowing a sliding body to linearly move on a main body. The guide device 30 includes a slide lower portion coupled to a bottom surface of the sliding body and a guide plate 32 assembled to the slide lower portion 31 to face the slide lower portion 31. Latching members 310 extend in a longitudinal direction of the main body from both ends of the slide lower portion 31, and holding parts 320 are provided at both ends of the guide plate 32 to be assembled to the latching members 310. The holding portions 320 are bent in the shape of hooks, and include injected portions 321 (made of polyoxymethylene acetal polymer (POM)) which enclose inner and outer surfaces as well as end portions of the holding portions 320. The injected portions 321 of the holding portions 320 are formed by insert-injection. The injected portions 321 made of POM are provided to improve sliding sensitivity in opening/closing operations of the sliding body.

However, the conventional guide device has a limitation in thickness reduction because the holding portions of the guide plate are entirely enclosed by the injected portions. In other words, the conventional injected portions entirely enclose the holding portions in the extending direction of the holding portions, thus hindering reduction in the thickness of the injected portions.

Moreover, the slide lower portion of the conventional guide device is made of a single material. That is, the slide lower portion or the guide plate is made of, for example, a magnesium alloy or SUS material. However, the magnesium alloy is more unfavorable to thickness reduction than the SUS material. Also, during a sliding operation, the magnesium alloy causes more abrasion to the injected portions than the SUS material, thus degrading sliding sensitivity.

Furthermore, the SUS material may generally implement a guide rail of a thin type when compared to the magnesium alloy, but the entire weight of the guide device increases and become susceptible to deformation during an impact.

### SUMMARY OF THE INVENTION

Accordingly, an aspect of the present invention is to provide a guide device for a sliding unit of a sliding-type portable terminal, which is favorable to slimness.

Another aspect of the present invention is to provide a guide device for a sliding unit of a sliding-type portable terminal that has a lighter weight through combination of parts made of suitable materials.

Another aspect of the present invention is to provide a guide device for a sliding unit of a sliding-type portable terminal that has a lighter weight and improved mechanical stiffness.

Further aspect of the present invention is to provide a guide device for a sliding unit of a sliding-type portable terminal that reinforces the mechanical stiffness of a display unit.

According to an aspect of the present invention, a guide device for a sliding unit used in a sliding-type portable terminal includes: a slide lower portion, a guide plate, a slide plate integrally engaged with a bottom surface of the slide lower portion, the slide plate sliding while being confined in the guide plate in a way to face the guide plate, and a plurality of lubrication members provided with intervals therebetween in a longitudinal direction of the guide plate to facilitate sliding of the slide plate. A lubrication member may be a member that facilitates sliding contact with a contacting object. The sliding facilitation may be achieved by the lubrication member providing a low-friction contact surface for contacting the object. This low-friction surface can be a permanent property of the material that the lubrication member is made of. It can also be due to the supply of a friction-reducing substance, such as an oil or a grease, on the contact surface of the lubrication member.

According to another aspect of the invention, a portable terminal having a main body, a sliding body, and a slidable guide device providing a sliding movement of the main body in relation to the slidng body is provided, wherein the slidable guide further comprising a slide lower portion, a slide plate coupled at a bottom of the slide lower portion, and a slide plate having a plurality of lubrication members provided at a predetermined interval at both ends thereof and slidably engages with the sliding plate to facilitate the sliding movement of the main body with respect to the sliding body.

According to an aspect of the invention, a guide device is characterized in that the plurality of lubrication members are formed of a Polyoxymethylene Acetal Polymer (POM) material, each of the plurality of lubrication members comprising:
an upper portion enclosing a predetermined region of a top surface of the second thin-type plate; a lower portion enclosing a predetermined region of a bottom surface of the second thin-type plate; and a sliding portion enclosing an end of the second thin-type plate, the sliding portion integrally formed with the upper portion and the lower portion and provided protuberant inwardly.

The plurality of lubrication members may be formed on the second thin-type plate by double injection.

Further advantageous embodiments are described in the appended claims.

### BRIEF DESCRIPTION OF THE DRAWINGS

The above and other features and advantages of an exemplary embodiment of the present invention will be more apparent from the following detailed description taken in conjunction with the accompanying drawings, in which:
FIG 1 is a perspective view of a guide device for a conventional sliding unit;
FIG 2 is a cross-sectional view of a guide device for a conventional sliding unit;
FIG 3A is a perspective view of a sliding-type portable terminal in a closed state;
FIG 3B is a side view of FIG 3A;
FIG 4 is a perspective view of a sliding-type portable terminal in an open state;
FIG 5 is an exploded perspective view of a sliding-type portable terminal in an open state;
FIG 6 is a cross-sectional view of a guide device according to the present invention; and
FIG 7 is a partial cut-away perspective view enlarging a state where a plurality of lubrication members for a guide device is mounted according to the present invention.

It should be noted that the views in the figures are schematic, and should not be used as a source of absolute or relative measurements.

### DETAILED DESCRIPTION OF THE EXEMPLARY EMBODIMENT

Hereinafter, a guide device for a sliding unit according to the present invention will be described with reference to the accompanying drawings.

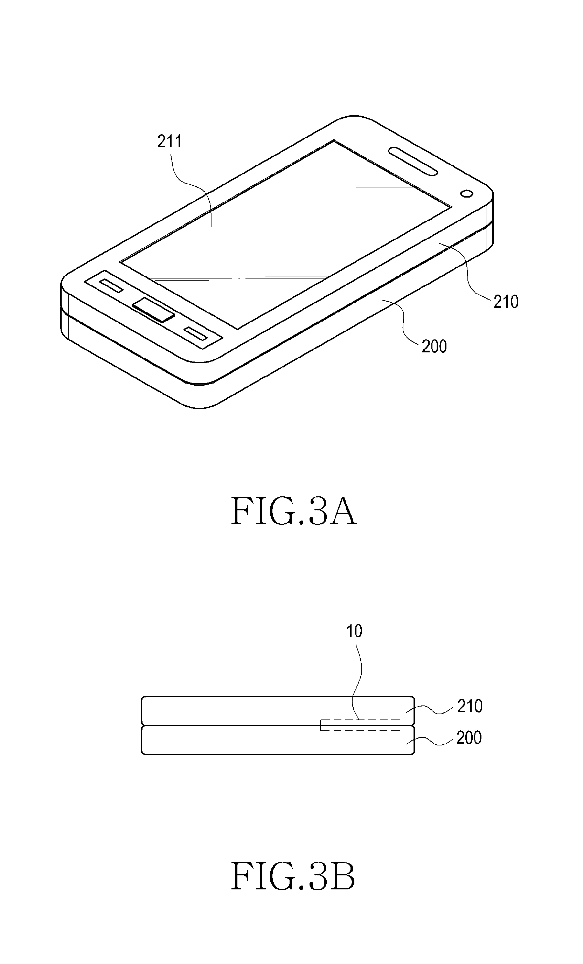

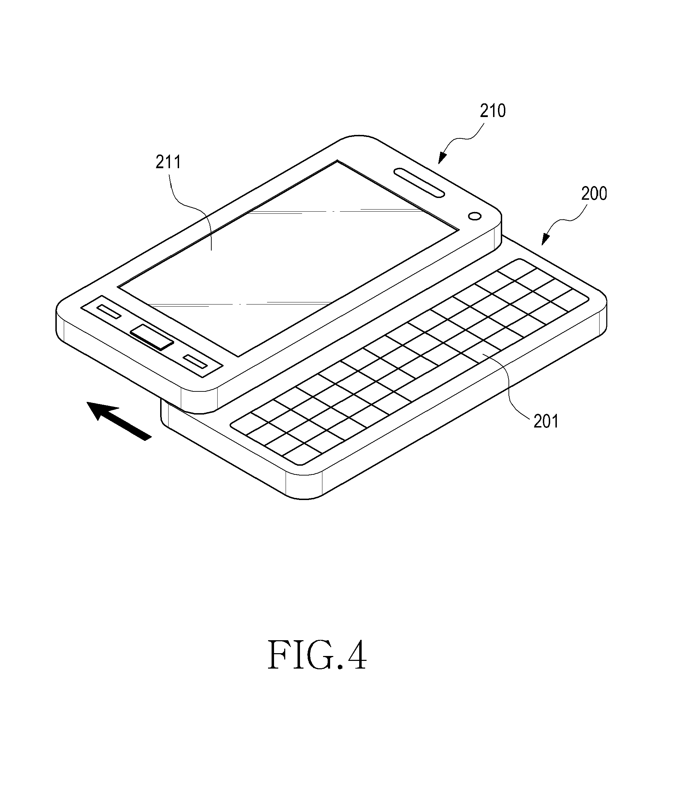

With reference to FIGs. 3A, 3B, and 4, a description will be made of a sliding-type portable terminal having a guide device for a sliding action according to the present invention. As shown, the sliding-type portable terminal includes a main body 200, a sliding body 210 which slides along a longitudinal direction of the main body 200, and a guide device 10 slidably connects the main body 200 and the sliding body 210. On a top surface of the main body 200 are arranged a plurality of keys 201, and on a top surface of the sliding body 210 is provided a display device 211. The sliding unit is a device for mechanically connecting the sliding body 210 to the main body 200 and passing a flexible circuit (not shown) therethrough. The sliding body 210 opens or closes the keys 201 by sliding on the main body 200. The display unit 211 is exposed at all times, and may be implemented by a Liquid Crystal Display (LCD), an Active-Matrix Organic Light-Emitting Diode (AMOLED), or a touch screen.

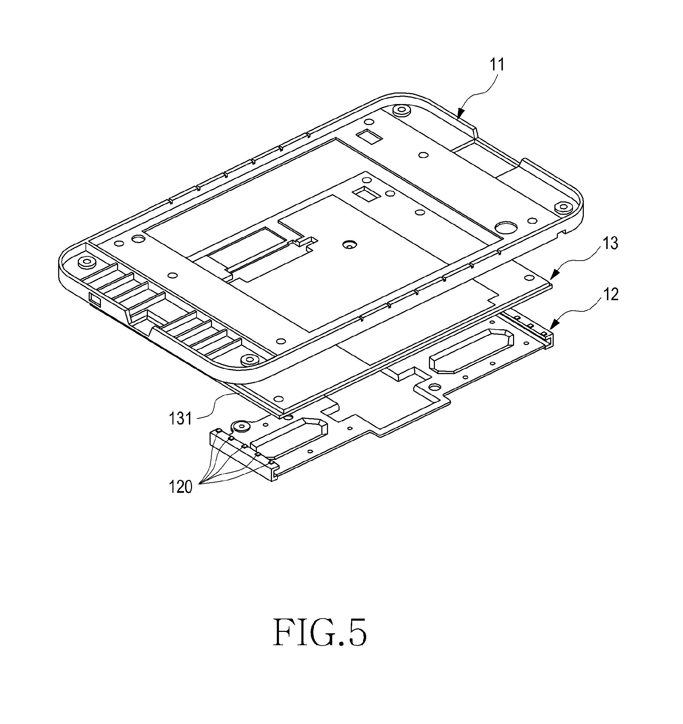

With reference to FIGs. 5 through 7, a description will be made of the guide device 10 for providing the sliding operation in the sliding-type portable terminal according to the present invention.

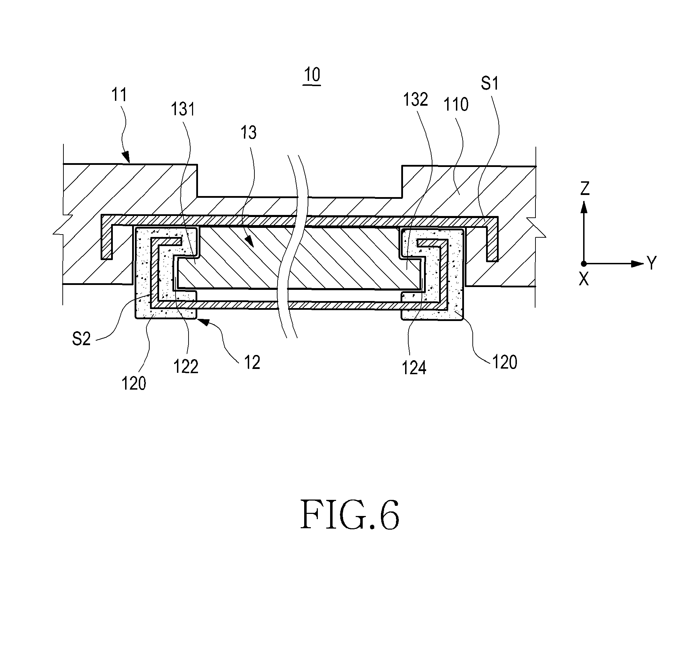

As shown in FIGs. 5 and 6, the guide device 10 according to the present invention includes a slide lower portion 11, a slide plate 13, a guide plate 12, and a plurality of lubrication members 120. The lubrication members 120 are provided on either end of the guide plate 12. Figure 5 shows a symmetrical arrangement with 5 lubrication members on either end. However, any number of lubrication members, for example, 1, 2, 3, 4, or more, may be provided on either end, in a symmetrical or asymmetrical arrangement. In particular, it should be noted that the guide device 10 according to the present invention is configured by combining members of various materials (a SUS material, synthetic resin, a magnesium alloy, etc.) to provide a slim and lightweight sliding unit while maintaining mechanical stiffness. That is, in the guide device 10 according to the present invention, each of the slide lower portion 11 and the guide plate 12 includes members formed of two different materials, and the slide plate 13 includes members formed of a single material.

The slide lower portion 11 is a member coupled to a bottom surface of the sliding body 210 shown in FIG 3A, and the slide plate 13 is a member coupled to the slide lower portion 11. The guide plate 12 is a member coupled to the slide plate 13 and fixed onto the main body 200 shown in FIG 3. The slide plate 13 and the guide plate 12 are slidably coupled such that the sliding body 210 shown in FIG 4 can slide on the main body 200 within a predetermined distance.

As shown in FIG 6, an X axis indicates a sliding direction, a Y axis indicates a longitudinal direction of the main body 200, that is, a horizontal direction, and a Z axis indicates a direction perpendicular to the longitudinal direction of the main body 200 (an up-and-down direction). Herein, the term "slim" means that the main body 200 is slim in terms of thickness in the direction of the Z axis. The slide lower portion 11 is a housing having the display unit 211 disposed thereon, to a bottom surface of which the slide plate 13 is coupled. The slide lower portion 11 includes a first thin-type plate S1 formed of a SUS material and a synthetic resin portion 110 to provide thinness and mechanical stiffness. That is, the slide lower portion 11 contributes to reinforcement of the stiffness of the display unit 211 and slimness and light weightness of the sliding unit.

The synthetic resin portion 110 is integrally formed with the first thin-type plate S1 by double-injection to enclose the first thin-type plate S1. In particular, the synthetic resin portion 110 is formed to enclose a top surface and both end portions of the first thin-type plate S1. A bottom surface of the first thin-type plate S1 on which the synthetic resin portion 110 is not formed is engaged with the slide plate 13 in a contact manner. The synthetic resin portion 110 is preferably formed of polycarbonate (PC) resin.

The slide plate 13 is preferably formed of a magnesium (Mg) alloy having a light weight and excellent mechanical stiffness. That is, the slide plate 13 is formed of a single material. The slide plate 13 is a member coupled to the bottom surface of the first thin-type plate S 1 by means of an engagement member (not shown), such that the slide plate 13 is coupled to the guide plate 12 to reciprocatively slide together with the main body 200. The slide plate 13 includes a first guide rail 131 and a second guide rail 132 on both end portions thereof. The first guide rail 131 and the second guide rail 132 extend in the direction of the X axis of the slide plate 13, face each other, and are symmetric to each other. The first guide rail 131 and the second guide rail 132 protrude away from each other, that is, in their outward directions.

The guide plate 12 is a member coupled to the slide plate 13 to provide a sliding movement of the slide plate 13. The guide plate 12 includes a second thin-type plate S2 made of a SUS material to provide thinness and mechanical stiffness. Both end portions of the guide plate 12 are bent inwardly in the form of' '⊏', such that the guide plate 12 stably slides while its both end portions being confined within the first guide rail 131 and the second guide rail 132. The plurality of lubrication members 120 are longitudinally provided on the both end portions of the guide plate 12 with intervals therebetween.

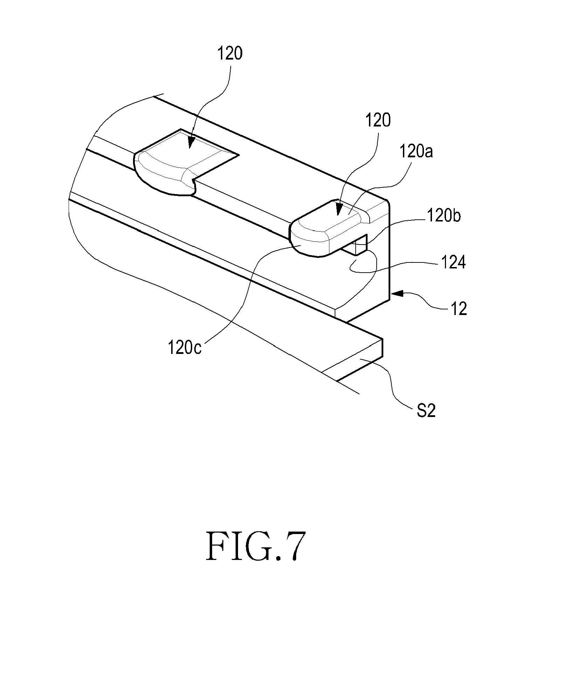

As shown in FIG 7, the plurality of lubrication members 120 are provided with intervals therebetween on the both end portions of the guide plate 12 in the longitudinal direction of the guide plate 12, and are preferably installed in entrance and exit portions of the both end portions. Each of the lubrication members 120 includes an upper portion 120a, a lower portion 120b, and a sliding portion 120c. The upper portion 120a encloses a predetermined region of a top surface of the second thin-type plate S2, the lower portion 120b encloses a predetermined region of a bottom surface of the second thin-type plate S2, and the sliding portion 120c encloses an end of the second thin-type plate S2. In particular, the sliding portions 120c is protuberant inwardly to provide smooth sliding of the slide plate 13.

The upper portions 120a, the lower portions 120b, and the sliding portions 120c are integrally formed on the both end portions of the guide plate 12 by double mold injection.

As shown in FIG 6, the first guide rail 131 and the second guide rail 132 of the slide plate 13 are coupled to a first guide opening 122 and a second guide opening 124, such that upon sliding of the slide plate 13, the first guide rail 131 and the second guide rail 132 slide within the first guide opening 122 and the second guide opening 124. The first guide rail 131 and the second guide rail 132 move while keeping in contact with the sliding portions 120c of the lubrication members 120.

Consequently, the guide device according to the present invention is configured by properly combining materials of the slide lower portion, the slide plate, and the guide plate to provide slimness, lightweightness, and mechanical stiffness of the sliding unit. In other words, the slide lower portion of the guide device according to the present invention is formed of a combination of the SUS material and the synthetic resin material to provide mechanical stiffness of the display unit and the thinness and mechanical stiffness of the sliding unit. The slide plate is formed of the magnesium alloy to provide lightweightness and mechanical stiffness, and the guide plate is formed of the SUS material to provide thinness and mechanical stiffness. The plurality of lubrication members 120 is provided with intervals therebetween to maintain the thinness.

As can be anticipated from the foregoing description, the guide device according to the present invention forms the slide lower portion of a combination of the SUS material and the synthetic resin material to provide mechanical stiffness of the display unit and the thinness and mechanical stiffness of the sliding unit, forms the slide plate of the magnesium alloy to provide lightweightness and mechanical stiffness, forms the guide plate of the SUS material to provide thinness and mechanical stiffness, and forms the plurality of lubrication members with intervals therebetween to provide thinness, thereby contributing to slimness and lightweightness of the sliding unit and thus slimness and lightweightness of the sliding-type portable terminal.

While a detailed embodiment has been described in the present invention, it would be obvious to those of ordinary skill in the art that various changes may be made without departing from the scope of the present invention.

## Claims

1. A guide device(10) for a sliding-type portable terminal, **characterized by**:
a slide lower portion(11);
a slide plate(13) coupled to a bottom of the sliding lower portion; and
a guide plate(12) slidably coupled at least at two opposing ends of the guide plate (12) to the slide plate (13)and having
a plurality of lubrication members(120) provided at intervals at both ends of the guide plate (12) to facilitate the sliding of the slide plate(13).

2. The guide device of claim 1, wherein the slide plate (13) comprises a first guide rail (131) and a second guide rail (132) at both ends thereof and adapted to slide while keeping in contact with a sliding portion (120c) of the plurality of lubrication members (120).

3. The guide device of claim 1, **characterized in that** the slide plate(13) comprises a first guide rail(131) and a second guide rail(132) at both ends thereof protruding in outward directions thereof, and
the guide plate(12) comprises, at either opposing end respectively, a first guide opening(122) and a second guide opening(124) slidably engaged with the first guide rail(131) and the second guide rail(132), respectively.

4. The guide device according to any of the preceding claims, **characterized in that** the slide lower portion(11) comprises:
a first thin-type plate(S 1) formed of a SUS material; and
a synthetic resin portion(110) formed on the first thin-type plate(S1) by double injection to enclose the first thin-type plate(S1) and to provide mechanical stiffness.

5. The guide device of claim 4, **characterized in that** the synthetic resin portion(110) is formed to enclose a top surface and both end portions of the first thin-type plate(S1), and a bottom surface of the first thin-type plate(S1) is disposed to contact the slide plate(13).

6. The guide device of claim 4 or 5, **characterized in that** the slide lower portion(11) reinforces the mechanical stiffness sufficiently so that a display unit of the terminal may be coupled to the slide lower portion.

7. The guide device according to any of the preceding claims, **characterized in that** the slide plate(13) is formed of a single material which is a lightweight magnesium alloy.

8. The guide device according to any of the preceding claims, **characterized in that** the guide plate(12) comprises a second thin-type plate(S2) formed of a SUS material, and the plurality of lubrication members(120) is provided with intervals therebetween on both end portions of the second thin-type plate(S2).

9. The guide device according to any of the preceding claims, **characterized in that** each of the slide lower portion(11) and the guide plate(12) comprises members formed of at least two different materials, and the slide plate(13) comprises members formed of at least one material.

10. The guide device of claim 8 or 9, **characterized in that** the plurality of lubrication members(120) are formed of a Polyoxymethylene Acetal Polymer, POM, material, each of the plurality of lubrication members(120) comprising:
an upper portion(120a) enclosing a predetermined region of a top surface of the second thin-type plate(S2);
a lower portion(120b) enclosing a predetermined region of a bottom surface of the second thin-type plate(S2); and
a sliding portion(120c) enclosing an end of the second thin-type plate(S2), the sliding portion(120c) integrally formed with the upper portion(120a) and the lower portion(120b) and provided protuberant inwardly.

11. The guide device according to any of the claims 8-10, wherein
the plurality of lubrication members(120) are formed on the second thin-type plate(S2) by double injection.

12. A portable terminal having a main body (200), a sliding body (210), and a guide device (10) according to any one of the previous claims, the guide device (10) arranged to facilitate a sliding movement of the main body (200) in relation to the sliding body (210), wherein the slide lower portion (11) of the guide device (10) is attached to the sliding body (210) and the guide plate (13) of the guide device (10) is attached to the main body (200).
